# EUROPÄISCHE PATENTANMELDUNG

(11) **EP 4 494 463 A1**
(43) Veröffentlichungstag der Anmeldung: **22.01.2025**
(21) Anmeldenummer: 24188919.5
(22) Anmeldetag: 16.07.2024
(51) Int. Cl.: A01K 31/00, A01K 31/16, A01K 31/18, A01K 31/17, A01K 39/01, A01K 39/02, A01K 39/04

(54) **HALTUNGSEINRICHTUNG ZUR HALTUNG VON GEFLÜGELTIEREN, BETREFFENDER GEFLÜGELTIERSTALL UND VERWENDUNG**

(30) Priorität: 19.07.2023 LU 504770
(71) Anmelder: Big Dutchman International GmbH, 49377 Vechta (DE)
(72) Erfinder: Wichmann, Rolf, 49377 Vechta-Bergstrup (DE); Jürgens, Angelika, 26209 Hatten (DE)
(74) Vertreter: Eisenführ Speiser

(57) **Zusammenfassung**

Die Erfindung betrifft eine Haltungseinrichtung (2) zur Haltung von Geflügeltieren, mit einem Boden (4), insbesondere einem Gitterboden (4), zur Bereitstellung einer Aufenthaltsfläche für Legehennen.

Erfindungsgemäß wird wenigstens eine abnehmbar oberhalb des Bodens (4) angeordnete Aufenthaltsfläche oder einen Einlegeboden (8) zur Kükenaufzucht vorgeschlagen, wobei die Aufenthaltsfläche und/oder der Einlegeboden (8) insbesondere als Einlegegitterboden (8) ausgebildet sind.

## Beschreibung

Die Erfindung betrifft eine Haltungseinrichtung zur Haltung von Geflügeltieren mit einem Boden, insbesondere einem Gitterboden, zur Bereitstellung einer Aufenthaltsfläche für Legehennen.

Derartige Haltungseinrichtungen sind aus dem Stand der Technik wie beispielweise aus der EP 3 824 726 A2 bekannt. Sie werden für die Legehennenhaltung zum Zwecke der Eierproduktion verwendet und verfügen typischerweise über Gitterböden, die bspw. als Drahtböden ausgebildet sind, und grobmaschig sowie häufig geneigt ausgebildet sind. Durch die Neigung des Gitterbodens rollen Systemeier ab, so dass Eier von Hand gesammelt werden können. Für derartige Haltungseinrichtungen ist bekannt, Futtertröge und Tränken fest zu installieren, so dass diese für die ausgewachsenen Tiere gut erreichbar sind. Für die Kükenaufzucht eignen sich derartige Haltungseinrichtungen nicht. Für die Küken ist die Bodenneigung genauso ungeeignet, wie die häufig verwendeten Boden-Maschenweiten. Außerdem bestünde ein hohes Verletzungsrisiko für die Küken. Futtertröge und Tränken wären ebenfalls nur unzureichend durch Küken erreichbar.

Aus dem Stand der Technik sind daher ferner Haltungssysteme für die Aufzucht von Küken bzw. Junghennen bekannt, welche einen engmaschigen Gitterboden aufweisen, welcher zumeist waagerecht angeordnet ist, und bei welchen die Höhe der Tränkenlinien und Futtertröge anpassbar ist.

Die aus dem Stand der Technik vorbekannte Trennung zwischen Aufzucht und Eierproduktion mittels eines speziell für Legehennen konzipierten Haltungssystems bedingt, dass ein Umstallen zwischen Aufzucht und produktiver Legehennenhaltung erforderlich ist. Ein derartiges Umstallen ist aufwendig, kann sich negativ auf die Tierleistung auswirken und darüber hinaus durch den erforderlichen Transport CO₂ freisetzen. Hinzu tritt eine häufig fehlende Versorgung der Tiere während des Transportes, das Erfordernis, die Tiere zu fangen und zu verladen, sowie das Einbringen der Tiere in eine unbekannte Umgebung mit Temperaturschwankungen, einer neuen Gruppenzusammensetzung / Rangordnung und unter Umständen einem geänderten Tagesrhythmus.

Es ist daher die Aufgabe der Erfindung die im Stand der Technik aufgefundenen Nachteile möglichst weitgehend zu überwinden. Insbesondere war eine Haltungseinrichtung zur Haltung von Geflügeltieren anzugeben, bei der der Stress für die Tiere durch Umstallvorgänge reduziert wird, das Tierwohl und die Leistung der Tiere erhalten bleiben und insgesamt weniger Transportaufwand entsteht.

Die Erfindung löst die eingangs bezeichnete Aufgabe in Bezug auf die Haltungseinrichtung, in dem diese wenigstens eine abnehmbar oberhalb des Bodens angeordnete Aufenthaltsfläche oder einen Einlegeboden zur Kükenaufzucht aufweist, wobei die Aufenthaltsfläche und/oder der Einlegeboden insbesondere als Einlegegitterboden ausgebildet sind.

Die Erfindung macht sich die Erkenntnis zunutze, dass durch die Verwendung eines abnehmbar oberhalb des Bodens angeordneten Einlegebodens zur Kükenaufzucht Eintagsküken innerhalb der Haltungseinrichtung und bis zu Beginn der Legeperiode aufgezogen werden können, um sodann nach dem Entfernen des Einlegebodens dieselbe Haltungseinrichtung für den Legehennenbetrieb zu verwenden. Mit anderen Worten beruht die Erfindung auf dem Gedanken, eine für die Legehennenhaltung optimierte Haltungseinrichtung temporär mittels des Einlegebodens so zu konfigurieren, dass diese auch für die Aufzucht von Küken geeignet ist, ohne Nachteile für den anschließenden Legebetrieb zu erzeugen. Für den Legebetrieb wird der Einlegeboden entfernt.

Hierdurch wird erreicht, dass kein Umstallen zwischen der Aufzucht und dem Legehennenbetrieb erforderlich ist. Auf diese Weise wird das Tierwohl gefördert, ein eventueller Leistungseinbruch durch den mit dem Umstallen verbundenen Stress vermieden und insgesamt Transportkosten ebenso verringert, wie der CO₂-Fußabdruck.

Für den Eierproduzenten kann somit neben einer Erhöhung des Tierwohls erreicht werden, dass durch relativ geringe Modifikationen eine Haltungseinrichtung auch zur Aufzucht von Eintagsküken verwendet werden kann. Hierdurch wird der Einstieg in die Kükenaufzucht erleichtert. Darüber hinaus wird die Vermarktung der produzierten Eier aufgrund des gestiegenen Tierwohls gefördert.

Gemäß einer Ausführungsform ist der Boden gegenüber einer Horizontalen um einen Neigungswinkel geneigt, wobei der Einlegeboden einen geringeren Neigungswinkel als der Boden aufweist. Vorzugsweise ist der Einlegeboden waagerecht angeordnet. Eine waagerechte Anordnung des Einlegebodens hat sich als besonders geeignet zur Kükenaufzucht erwiesen.

Gemäß einer Ausführungsform weist die Haltungseinrichtung eine Fütterungseinrichtung mit einem Futtertrog auf, wobei der Einlegeboden an dem Futtertrog aufgehängt oder auf dem Futtertrog aufgesetzt wird. Auf diese Weise kann der Einlegeboden einfach und sicher an dem Futtertrog befestigt werden, womit gleichzeitig sichergestellt wird, dass der Futtertrog durch die Küken, die sich auf dem Einlegeboden befinden, gut zugänglich ist. Im Falle einer waagerechten Anordnung des Einlegebodens wird darüber hinaus ermöglicht, dass der Einlegeboden vollumfänglich auf dem Futtertrog aufliegen kann. Ferner wird vermieden, dass sich Küken einklemmen und verletzen können.

Gemäß einer Ausführungsform sind der Boden und der Einlegeboden als Gitterboden ausgebildet, wobei sich eine Maschenweite des Einlegebodens von einer Maschenweite des Bodens unterscheidet. Insbesondere weist der Einlegeboden eine geringere Maschenweite auf als der Boden. Durch die Maschenweite in Verbindung mit einem im Wesentlichen horizontal angeordneten Einlegeboden wird erreicht, dass auf dem Einlegeboden angeordnetes Futter nicht in Richtung eines Gefälles weggescharrt werden kann. Darüber hinaus stellt die geringe Maschenweite sicher, dass sich die Tiere während der gesamten Aufzuchtperiode weder einklemmen noch verletzen können. Insbesondere werden Verletzungen durch das Durchtreten auf einem zu grobmaschigen Boden verhindert. Unter Bezugnahme auf den Boden wird durch die groben Maschen sichergestellt, dass im Legebetrieb eine entsprechende Selbstreinigung ermöglicht wird.

Gemäß einer Ausführungsform ist der Einlegeboden mehrteilig, insbesondere dreiteilig ausgebildet. Durch die Teilung des Einlegebodens kann dieser besonders einfach montiert und entnommen werden. Durch die mehrteilige Ausbildung des Einlegebodens kann dieser besonders vorteilhaft mit den Futtertrögen verbunden werden bzw. in diese eingehängt werden. Hierdurch wird vermieden, dass sich Küken unter den Futtertrögen einklemmen.

Gemäß einer alternativen Ausführungsform ist der Einlegeboden einteilig ausgebildet und erstreckt sich insbesondere über die gesamte Breite eines entsprechenden Abschnitts der Haltungseinrichtung. Gemäß einer alternativen Ausführungsform kann der Einlegeboden nach Art einer Schublade seitlich einschiebbar ausgebildet sein. Insoweit kann der Einlegeboden insbesondere von außen oder von einem inneren Laufgang aus einteilig oder mehrteilig eingeschoben werden.

Gemäß einer Ausführungsform weist die Haltungseinrichtung ein Anflugblech auf, welches benachbart zu einem abschüssigen Ende des Bodens angeordnet ist und wobei zwischen dem Boden und dem Anflugblech ein Abrollspalt ausgebildet ist, welcher derart dimensioniert ist, dass Eier zwischen dem Boden und dem Anflugblech abrollen können, wobei der Einlegeboden einen im montierten Zustand im Wesentlichen horizontalen Abschnitt aufweist und einen im montierten Zustand im wesentlich vertikal verlaufenden Abschnitt und wobei der im Wesentlichen vertikal verlaufende Abschnitt den Abrollspalt zumindest teilweise, insbesondere vollständig verschließt. Hierdurch wird vermieden, dass sich Küken im Bereich des Abrollspaltes einklemmen können.

Gemäß einer Ausführungsform weist die Fütterungseinrichtung wenigstens eine Tränke auf, wobei die Tränke höhenverstellbar ausgebildet ist und/oder wobei die Fütterungseinrichtung wenigstens einen Futtertrog aufweist und wobei der Futtertrog höhenverstellbar ausgebildet ist, derart, dass die Tränke und/oder der Futtertrog von dem Boden und dem Einlegeboden aus zugänglich sind. Auf diese Weise kann sichergestellt werden, dass die Wasser- und Futterversorgung für die unterschiedlichen Wachstumsstadien der Küken bzw. Junghennen und auch für den produktiven Legebetrieb sichergestellt ist. Die Tränke und der Futtertrog können so eingestellt werden, dass diese von dem Einlegeboden für die Küken zugänglich sind. Darüber hinaus können diese an das fortschreitende Tierwachstum angepasst werden und auch nach dem Entfernen des Einlegebodens so konfiguriert werden, dass diese für die ausgewachsenen Tiere gut zugänglich sind.

Gemäß einer Ausführungsform weist die Haltungseinrichtung wenigstens ein Nest und/oder ein Eierabrollsystem auf und wenigstens ein Absperrgitter, welches abnehmbar an der Haltungseinrichtung angeordnet und dazu eingerichtet ist, das Nest und/oder das Eierabrollsystem abzusperren. Auf diese Weise kann erreicht werden, dass die Küken zunächst lediglich in einem begrenzten Bereich der Haltungseinrichtung aufgenommen sind, wobei in diesem Bereich sichergestellt ist, dass die Küken die für die Aufzucht erforderlichen Bedingungen auffinden, d.h. insbesondere kein Einklemmrisiko besteht, und Futter und Wasser gut zugänglich sind sowie der Einlegeboden die entsprechende Maschenweite aufweist. Mit zunehmendem Wachstum der Küken bzw. Junghennen kann das Absperrgitter entfernt werden, wodurch weitere Bereiche der Haltungseinrichtung zugänglich werden, bspw. das Nest und/oder das Eiabrollsystem. Küken können diesen Bereich nicht erreichen und werden daher wirkungsvoll vor Verletzungen bspw. durch Einklemmen in dem Eierabrollsystem oder dem Nest geschützt. Gemäß einer Ausführungsform weist die Haltungseinrichtung ein gangseitiges Gitter auf, welches dazu eingerichtet ist, einen Zugang für die Küken zu einem Gang abzusperren.

Gemäß einer Ausführungsform weist die Haltungseinrichtung eine Sitzstange auf, wobei die Sitzstange höhenverstellbar ausgebildet ist. Insbesondere kann die Sitzstange während der Kükenaufzucht derart verstellt werden, dass auch hier keinerlei Einklemmrisiko zwischen Sitzstange und weiteren Bauteilen der Haltungseinrichtung besteht.

Gemäß einer Ausführungsform weist die Haltungseinrichtung wenigstens eine seitliche Trennwand mit Belüftungsöffnungen auf, und wobei benachbart zu dem Einlegeboden angeordnete Belüftungsöffnungen einen geringeren Öffnungsdurchmesser aufweisen als jene Belüftungsöffnungen, die nicht benachbart zu dem Einlegeboden angeordnet sind. Durch die Reduzierung des Öffnungsdurchmessers im Bereich des Einlegebodens wird sichergestellt, dass auch in Bezug auf die Belüftungsöffnungen das Risiko für die Küken reduziert wird, dass sich diese in den Belüftungsöffnungen einklemmen oder sich an diesen verletzen.

Die Aufzucht der Eintagsküken und die anschließende Konfiguration für den Legehennenbetrieb erfolgen vorzugsweise in drei Phasen. In einer ersten Phase befinden sich die Küken auf dem Einlegeboden. Der Einlegeboden oder die Einlegeböden hängen vorzugsweise an dem Futtertrog. Der Futtertrog wird ebenso wie die Sitzstange in eine obere Position verbracht und der entsprechende Bereich der Haltungseinrichtung, auch als Etage bezeichnet, durch Außengitter verschlossen. Mit zunehmendem Wachstum der Küken hin zu Junghennen werden die Einlegeböden entnommen und die Sitzstange bzw. Futtertröge in eine untere Position gebracht. Die Außengitter bleiben weiterhin geschlossen, wobei in Richtung eines innenseitigen Ganges ein Außengitter derart positioniert wird, dass weitere Bereiche der Haltungseinrichtung, insbesondere eine oberhalb des beschriebenen Bereiches angeordnete Etage mit einem geneigten Boden freigegeben werden. In einer dritten Phase wird die Haltungseinrichtung derart konfiguriert, dass ein Legehennenbetrieb erfolgen kann. Hierzu wird das Außengitter geöffnet, und auch Gitter in Richtung eines innenseitigen Ganges entfernt. Auf diese Weise werden nunmehr die Nester und Eiabrollsysteme sowie weitere Bereiche der Haltungseinrichtung zugänglich. In dieser Konfiguration ähnelt die Haltungseinrichtung im Wesentlichen bestehenden Legehennen-Haltungseinrichtungen.

Die Erfindung ist vorstehend unter Bezugnahme auf eine Haltungseinrichtung beschrieben worden. In einem weiteren Aspekt betrifft die Erfindung einen Geflügeltierstall für die Haltung von Geflügeltieren, insbesondere einen Legehennenstall, umfassend eine Haltungseinrichtung. Die Erfindung löst die eingangs bezeichnete Aufgabe in Bezug auf den Geflügeltierstall, in dem die Haltungseinrichtung nach einem der vorstehenden Ansprüche ausgebildet ist. Der Geflügeltierstall macht sich die gleichen Vorteile und bevorzugten Ausführungsformen zunutze wie die erfindungsgemäße Haltungseinrichtung und umgekehrt. Diesbezüglich wird auf die obigen Ausführungen verwiesen und deren Inhalt hiermit einbezogen.

In einem weiteren Aspekt betrifft die Erfindung ein Verfahren zum Halten von Geflügeltieren. Die Erfindung löst die eingangs bezeichnete Aufgabe in Bezug auf das Verfahren, in dem dieses die Schritte aufweist: Bereitstellen einer Haltungseinrichtung nach mindestens einem der vorstehenden Ausführungsbeispiele, Einstallen von Geflügeltieren, insbesondere Eintagsküken, auf den Einlegeboden, Aufziehen der Küken zu Legehennen, Entfernen des Einlegebodens nach dem Aufziehen der Küken, Halten der Legehennen auf dem Boden der Haltungseinrichtung.

Durch das erfindungsgemäße Verfahren wird zusammengefasst erreicht, dass Eintagsküken innerhalb der Haltungseinrichtung bis zum Beginn der Legeperiode aufgezogen werden können und sodann dieselbe Haltungseinrichtung für den Legehennenbetrieb verwendet werden kann, wodurch ein Umstallen zwischen Aufzucht und Legehennenbetrieb vermieden werden kann. Hierdurch wird der Stress für die Tiere reduziert, Transportkosten und COz-Emmision gesenkt und insgesamt das Tierwohl gefördert. Im Übrigen macht sich das Verfahren die gleichen Vorteile und bevorzugten Ausführungsformen zunutze wie die erfindungsgemäße Haltungseinrichtung und der erfindungsgemäße Geflügeltierstall und umgekehrt. Diesbezüglich wird auf die obigen Ausführungen verwiesen und deren Inhalt hiermit einbezogen.

In einem weiteren Aspekt betrifft die Erfindung die Verwendung einer Haltungseinrichtung nach mindestens einem der vorstehenden Ausführungsbeispielen zur Haltung von Geflügeltieren, insbesondere Legehennen oder Eintagsküken, in einem Geflügeltierstall, vorzugsweise in einem Geflügeltierstall nach dem obigen Ausführungsbeispiel. Auch die Verwendung macht sich die gleichen Vorteile und bevorzugten Ausführungsformen zunutze wie die erfindungsgemäße Haltungseinrichtung, der erfindungsgemäße Geflügeltierstall und das erfindungsgemäße Verfahren und umgekehrt. Diesbezüglich wird auf die obigen Ausführungen verwiesen und deren Inhalt hiermit einbezogen.

Die Erfindung wird nachfolgend anhand eines bevorzugten Ausführungsbeispiels unter Bezugnahme auf die beigefügten Figuren näher beschrieben.

### Hierbei zeigen:

- Fig. 1: ein Ausführungsbeispiel einer erfindungsgemäßen Haltungseinrichtung angeordnet in einem Geflügeltierstall in einer Schnittansicht;
- Fig. 2: eine Ebene der erfindungsgemäßen Haltungseinrichtung gemäß Figur 1 in einer Schnittansicht;
- Fig. 3 und 4: Detailansichten der erfindungsgemäßen Haltungseinrichtung gemäß den Figuren 1 und 2 in perspektivischen Ansichten;
- Fig. 5 und 6: Detailansichten von Einlegeböden inklusive Befestigung in perspektivischen Ansichten.

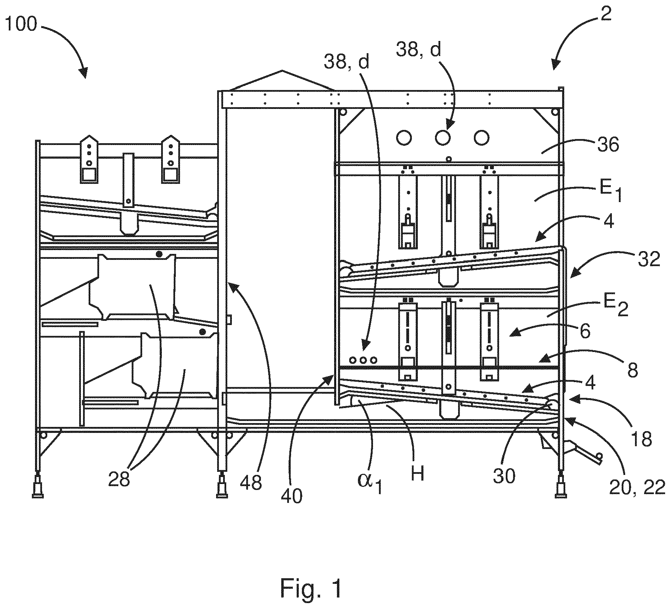

Figur 1 zeigt einen exemplarisch dargestellten Geflügeltierstall 100 für die Haltung von Geflügeltieren. Der Geflügeltierstall 100 umfasst eine Haltungseinrichtung 2. Die Haltungseinrichtung 2 ist zur Haltung von Geflügeltieren ausgebildet und sowohl zur Kükenaufzucht als auch für den Legehennenbetrieb geeignet. Die Haltungseinrichtung 2 weist einen gegenüber einer Horizontalen H um einen Neigungswinkel α₁ geneigt angeordneten Boden 4 auf. Der Boden 4 ist als Gitterboden 4 ausgebildet. Der Boden 4 stellt eine Aufenthaltsfläche für die Legehennen bereit, wobei durch den Neigungswinkel α₁ des Bodens 4 sichergestellt ist, dass Eier in Richtung eines Eiabrollsystems 30 abrollen können. In dem in Figur 1 gezeigten Ausführungsbeispiel weist die Haltungseinrichtung 2 eine erste Etage E₁ und eine zweite Etage E₂ auf. In beiden Etagen E₁, E₂ ist ein Boden 4 angeordnet. In der unteren Etage E₂ ist darüber hinaus ein abnehmbar oberhalb des Bodens 4 angeordneter Einlegeboden 8 zur Kükenaufzucht angeordnet. Der Einlegeboden 8 ist als Einlegegitterboden ausgebildet. Der Einlegeboden 8 ist im Wesentlichen waagerecht angeordnet und weist somit einen geringeren Neigungswinkel auf als der Boden 4.

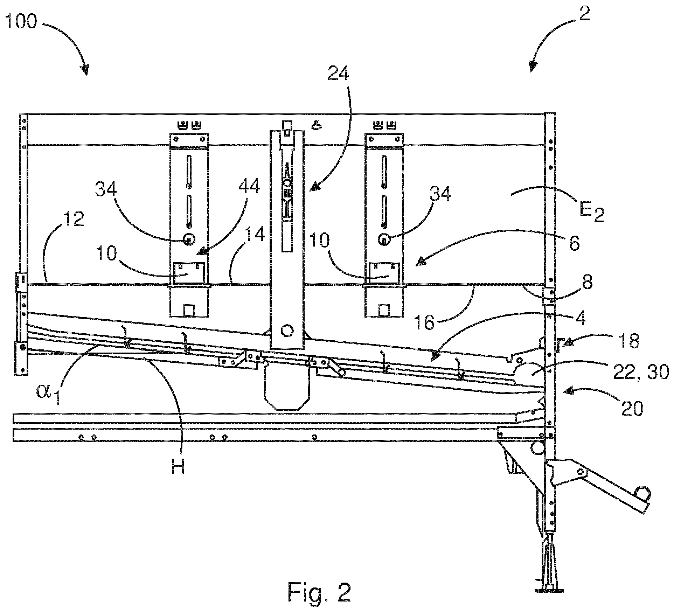

Die Haltungseinrichtung 2 weist eine Fütterungseinrichtung 6 auf, die insbesondere in Figur 2 detailliert ist. Die Fütterungseinrichtung 6 weist einen Futtertrog 10 auf. Der Einlegeboden 8 ist an dem Futtertrog 10 aufgehängt oder auf diesen aufgesetzt. Wie in Figur 2 gezeigt, ist der Einlegeboden 8 dreiteilig ausgebildet, d.h. weist ein erstes Einlegebodensegment 12, ein zweites Einlegebodensegment 14 und ein drittes Einlegebodensegment 16 auf. Die Haltungseinrichtung 2 weist ferner ein Anflugblech 18 auf. Das Anflugblech 18 ist benachbart zu einem abschüssigen Ende 20 des Bodens 4 angeordnet. Zwischen dem Boden 4 und dem Anflugblech 18 ist ein Abrollspalt 22 ausgebildet. Dieser ist derart dimensioniert, dass Eier zwischen dem Boden 4 und dem Anflugblech 18 abrollen können. Der Futtertrog 10 ist höhenverstellbar ausgebildet, derart, dass der Futtertrog 10 von dem Boden 4 und dem Einlegeboden 8 aus zugänglich ist und je nach Betriebsstadium der Haltungseinrichtung 2 angepasst werden kann, d.h. insbesondere bezugnehmend auf die Größe der Tiere und auf den Umstand, ob die Tiere auf dem Einlegeboden 8 oder dem Boden 4 gehalten werden.

Die Fütterungseinrichtung weist ferner eine Tränke auf, welche ebenfalls höhenverstellbar ausgebildet ist. Im Übrigen weist die Haltungseinrichtung 2 wenigstens eine Sitzstange 34 auf, welche ebenfalls höhenverstellbar ausgebildet ist. Unter Bezugnahme auf Figur 1 weist die Halterungseinrichtung 2 darüber hinaus ein Absperrgitter 32 sowie ein innenseitiges Gitter 40 auf. Mittels der Gitter 32, 40 kann der Aufenthaltsbereich, insbesondere für die Küken, die auf dem Einlegeboden 8 aufgenommen sind, begrenzt werden, sodass ein Verletzungsrisiko reduziert wird. Die Haltungseinrichtung 2 weist ferner eine seitliche Trennwand 36 auf. Die seitliche Trennwand 36 weist Belüftungsöffnungen 38 auf. Benachbart zu dem Einlegeboden 8 angeordnete Belüftungsöffnungen 38 weisen einen geringeren Öffnungsdurchmesser d als jene Belüftungsöffnungen 38, die nicht benachbart zu dem Einlegeboden 8 angeordnet sind. Die Belüftungsöffnungen 38 sind in Figur 1 lediglich exemplarisch dargestellt.

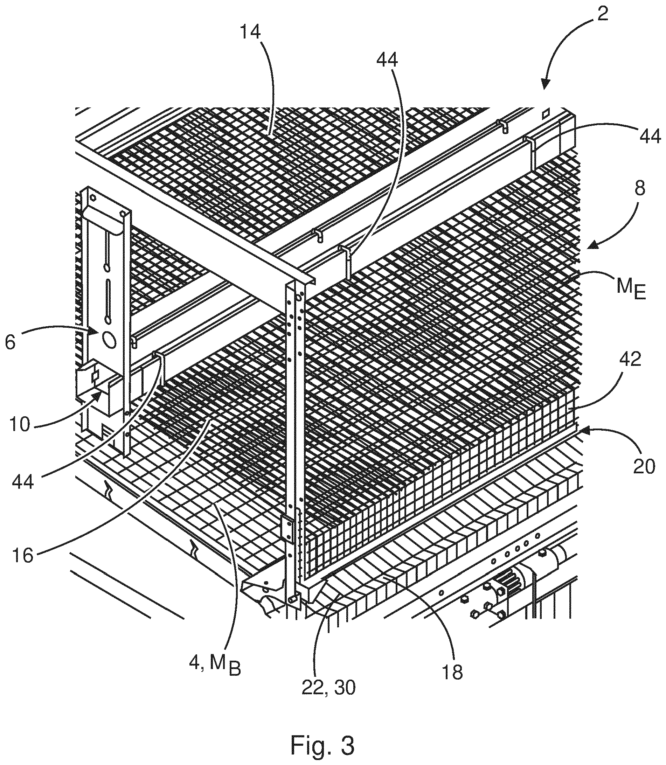

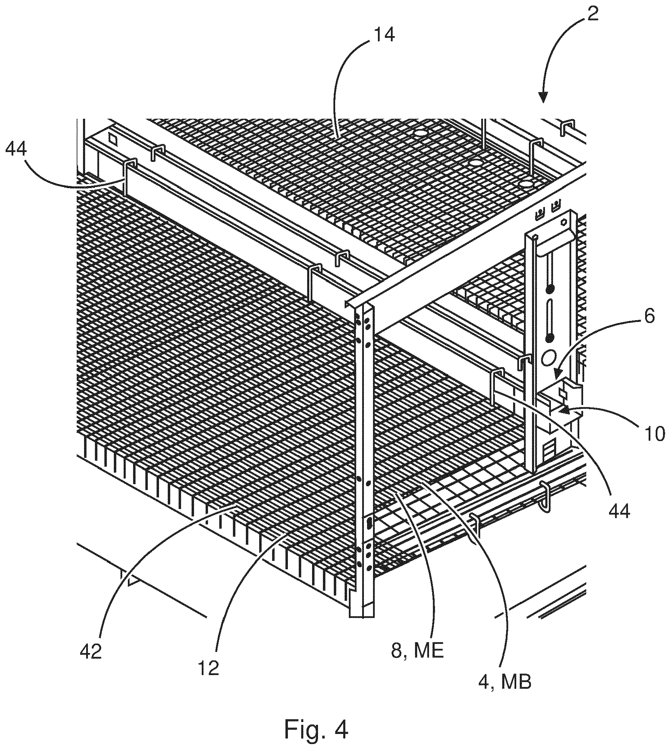

Die Figuren 3 und 4 zeigen Details der Haltungseinrichtung 2 in perspektivischen Darstellungen. In den Figuren ist erkennbar, dass dem Einlegeboden 8 Haken 44 zugeordnet sind, welche dazu eingerichtet sind, in den Futtertrog 10 einzugreifen. Darüber hinaus sind der Boden 4 und der Einlegeboden 8 als Gitterboden 4, 8 ausgebildet. Der Boden 4 weist eine Maschenweite M_{B} auf. Der Einlegeboden 8 weist eine Maschenweite Mε auf. Die Maschenweite Mε des Einlegebodens 8 unterscheidet sich von der Maschenweite M_{B} des Bodens, nämlich dergestalt, dass der Einlegeboden 8 eine geringere Maschenweite Mε aufweist als der Boden 4. Unter Bezugnahme auf den Einlegeboden 8 wird hierdurch sichergestellt, dass die Küken nicht durch eine zu große Maschenweite verletzt werden. Im Legebetrieb stellt die größere Maschenweite sicher, dass Schmutzpartikel sicher nach unten abgeführt werden. Wie in den Figuren 3 und 4 zu erkennen ist, weist der Einlegeboden 8 einen im montierten Zustand im Wesentlichen horizontalen Abschnitt 46 auf, auf dem die Küken aufgenommen werden. Der Einlegeboden 8 weist darüber hinaus einen im montierten Zustand im Wesentlichen vertikal verlaufenden Zustand Abschnitt 42, wobei der vertikal verlaufende Abschnitt 42 den Abrollspalt 22 zumindest teilweise, insbesondere vollständig verschließt, um auch hier ein eventuelles Verletzungsrisiko für die Küken zu reduzieren.

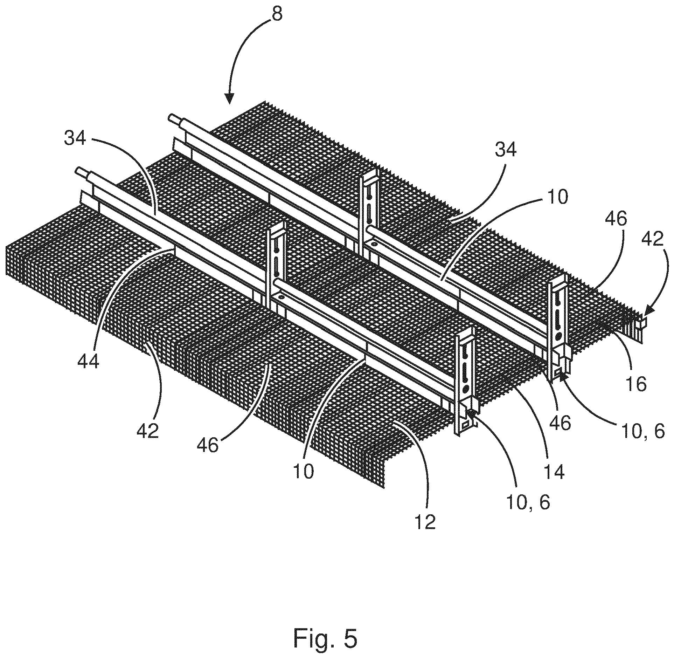

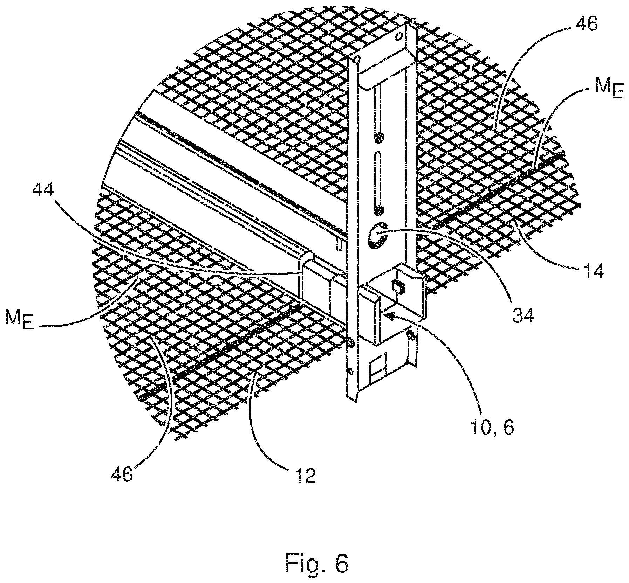

In den Figuren 5 und 6 ist die Konfiguration und die Aufhängung des Einlegebodens 8, der aus den Segmenten 12 bis 16 besteht, detailliert. Die außenliegenden Einlegebodensegmente 12, 16 weisen sowohl einen vertikalen Abschnitt 42 als auch einen horizontalen Abschnitt 46 auf. Das zweite Einlegebodensegment 14 weist lediglich einen horizontalen Abschnitt 46 auf. Die jeweiligen Einlegebodensegmente 12, 14, 16 sind mithilfe von Haken 44 in die Futtertröge 10 eingehängt.

Unter Bezugnahme auf die Figuren 1 und 2 wird nachfolgend das Verfahren zur Kükenaufzucht mit anschließendem Legebetrieb beschrieben. Ausgehend von der in Figur 1 gezeigten Konfiguration, bei der der Einlegeboden 8 in die Haltungseinrichtung 2 eingesetzt ist, werden zudem die Sitzstangen 34 und die Tröge 10 in eine obere Position gebracht, so dass diese für die Eintagsküken zugänglich sind. Die Gitter 32, 40 sind geschlossen und somit ist der Aufenthaltsbereich der Küken auf die Ebene E₂ beschränkt. Mit zunehmendem Wachstum der Küken bzw. Junghennen wird sodann der Einlegeboden 8 entnommen und die Sitzstangen 34 sowie die Tröge 10 in eine untere Position überführt. Das Gitter 32 bleibt verschlossen, das Gitter 40 wiederum wird geöffnet. Insoweit sind nun beide Etagen E₁, E₂ für die Jungtiere zugänglich und darüber hinaus der Bereich links neben dem innenseitigen Gitter 40. Die Nester 28 sind jedoch nicht zugänglich.

Nach dem Abschluss des Aufzuchtvorgangs wird zum Zwecke des Legebetriebs nunmehr das Gitter 40 sowie auch das Gitter 32 entfernt. Somit sind sodann alle Bereiche der Haltungseinrichtung 2 für die Tiere zugänglich. Dies schließt die Nester 28 ein. Die Konfiguration der Haltungseinrichtung 2 ähnelt nun aus dem Stand der Technik für den Legebetrieb bekannten Einrichtungen.

### Bezugszeichen

- 2: Haltungseinrichtung
- 4: Boden / Gitterboden
- 6: Fütterungseinrichtung
- 8: Aufenthaltsfläche / Einlegeboden / Einlegegitterboden
- 10: Futtertrog
- 12: erstes Einlegebodensegment
- 14: zweites Einlegebodensegment
- 16: drittes Einlegebodensegment
- 18: Anflugblech
- 20: abschüssiges Ende des Bodens
- 22: Abrollspalt
- 24: Tränke
- 28: Nest
- 30: Eierabrollsystem
- 32: Absperrgitter
- 34: Sitzstange
- 36: seitliche Trennwand
- 38: Belüftungsöffnungen
- 40: Innenseitiges Gitter
- 42: vertikaler Abschnitt des Einlegebodens
- 44: Haken
- 46: horizontaler Abschnitt des Einlegebodens
- 48: Gitter
- 100: Geflügeltierstall
- α₁: Neigungswinkel des Bodens
- d: Öffnungsdurchmesser
- E₁,E₂: Etagen
- H: Horizontale
- M_{E}: Maschenweite des Einlegebodens
- M_{B}: Maschenweite des Bodens

## Patentansprüche

1. Haltungseinrichtung (2) zur Haltung von Geflügeltieren, mit
- einem Boden (4), insbesondere einem Gitterboden (4), zur Bereitstellung einer Aufenthaltsfläche für Legehennen,
**gekennzeichnet durch** wenigstens eine abnehmbar oberhalb des Bodens (4) angeordnete Aufenthaltsfläche oder einen Einlegeboden (8) zur Kükenaufzucht, wobei die Aufenthaltsfläche und/oder der Einlegeboden (8) insbesondere als Einlegegitterboden (8) ausgebildet sind.

2. Haltungseinrichtung (2) nach Anspruch 1,
wobei der Boden (4) gegenüber einer Horizontalen (H) um einen Neigungswinkel (α₁) geneigt ist und wobei der Einlegeboden (8) einen geringeren Neigungswinkel als der Boden (4) aufweist, insbesondere wobei der Einlegeboden (8) waagerecht angeordnet ist.

3. Haltungseinrichtung (2) nach einem der vorstehenden Ansprüche,
wobei die Haltungseinrichtung (2) eine Fütterungseinrichtung (6) mit einem Futtertrog (10) aufweist und wobei der Einlegeboden (8) an dem Futtertrog (10) aufgehängt oder auf den Futtertrog aufgesetzt wird, insbesondere wobei dem Einlegeboden (8) Haken (44) zugeordnet sind, welche dazu eingerichtet sind, die den Futtertrog (10) einzugreifen.

4. Haltungseinrichtung (2) nach einem der vorstehenden Ansprüche,
wobei der Boden (4) und der Einlegeboden (8) als Gitterboden (4, 8) ausgebildet sind und wobei sich eine Maschenweite (M_{E}) des Einlegebodens (8) von einer Maschenweite (M_{B}) des Bodens (4) unterscheidet.

5. Haltungseinrichtung (2) nach Anspruch 4,
wobei der Einlegeboden (8) eine geringere Maschenweite (M_{E}) aufweist als der Boden (4).

6. Haltungseinrichtung (2) nach einem der vorstehenden Ansprüche,
wobei der Einlegeboden (8) mehrteilig, insbesondere dreiteilig, ausgebildet ist.

7. Haltungseinrichtung (2) nach einem der vorstehenden Ansprüche,
wobei die Haltungseinrichtung (2) ein Anflugblech (18) aufweist, welches benachbart zu einem abschüssigen Ende (20) des Bodens (4) angeordnet ist, und wobei zwischen dem Boden (4) und dem Anflugblech (18) ein Abrollspalt (22) ausgebildet ist, welcher derart dimensioniert ist, dass Eier zwischen dem Boden (4) und dem Anflugblech (18) abrollen können,
wobei der Einlegeboden (8) einen im montierten Zustand im Wesentlichen horizontalen Abschnitt (46) aufweist und einen im montierten Zustand im Wesentlichen vertikal verlaufenden Abschnitt (42), und wobei der im Wesentlichen vertikal verlaufende Abschnitt (42) den Abrollspalt (22) zumindest teilweise, insbesondere vollständig verschließt.

8. Haltungseinrichtung (2) nach einem der vorstehenden Ansprüche,
wobei die Fütterungseinrichtung (6) wenigstens eine Tränke (24) aufweist und wobei die Tränke (24) höhenverstellbar ausgebildet ist und/oder wobei die Fütterungseinrichtung (6) wenigstens einen Futtertrog (10) aufweist und wobei der Futtertrog (10) höhenverstellbar ausgebildet ist, derart, dass die Tränke (24) und/oder der Futtertrog (10) von dem Boden (4) und dem Einlegeboden (8) aus zugänglich sind.

9. Haltungseinrichtung (2) nach einem der vorstehenden Ansprüche,
wobei die Haltungseinrichtung (2) wenigstens ein Nest (28) und/oder ein Eierabrollsystem (30) aufweist und wenigstens ein Absperrgitter (32, 40), welches abnehmbar an der Haltungseinrichtung (2) angeordnet und dazu eingerichtet ist, das Nest (28) und/oder das Eierabrollsystem (30) abzusperren.

10. Haltungseinrichtung (2) nach einem der vorstehenden Ansprüche,
wobei die Haltungseinrichtung (2) eine Sitzstange (34) aufweist, wobei die Sitzstange (34) höhenverstellbar ausgebildet ist.

11. Haltungseinrichtung (2) nach einem der vorstehenden Ansprüche,
wobei die Haltungseinrichtung (2) wenigstens eine seitliche Trennwand (36) mit Belüftungsöffnungen (38) aufweist, und wobei benachbart zu dem Einlegeboden (8) angeordnete Belüftungsöffnungen (38) einen geringeren Öffnungsdurchmesser (d) aufweisen als jene Belüftungsöffnungen (38), die nicht benachbart zu dem Einlegeboden (8) angeordnet sind.

12. Geflügeltierstall (100) für die Haltung von Geflügeltieren, insbesondere Legehennenstall, umfassend eine Haltungseinrichtung (2) nach mindestens einem der vorhergehenden Ansprüche.

13. Verfahren zum Halten von Geflügeltieren,
mit den Schritten:
- Bereitstellen einer Haltungseinrichtung (2) nach mindestens einem der Ansprüche 1 bis 11,
- Einstallen von Geflügeltieren, insbesondere Eintagsküken, auf den Einlegeboden (8),
- Aufziehen der Küken zu Legehennen,
- Entfernen des Einlegebodens (8) nach dem Aufziehen der Küken,
- Halten der Legehennen auf dem Boden (4) der Haltungseinrichtung (2).

14. Verwendung einer Haltungseinrichtung (2) nach mindestens einem der vorhergehenden Ansprüche zur Haltung von Geflügeltieren, insbesondere Legehennen oder Eintagsküken, in einem Geflügeltierstall (100), vorzugsweise in einem Geflügeltierstall (100) nach Anspruch 12.
